# EUROPÄISCHE PATENTANMELDUNG

(11) **EP 1 154 072 A1**
(43) Veröffentlichungstag der Anmeldung: **14.11.2001**
(21) Anmeldenummer: 01109947.0
(22) Anmeldetag: 24.04.2001
(51) Int. Cl.: D21H 17/24, C08B 37/00

(54) **Filtermaterial mit Aromatisierungs- und Aromaschutzeigenschaften sowie Verfahren zu seiner Herstellung**

(30) Priorität: 12.05.2000 DE 10023462
(71) Anmelder: PAPCEL - Papier und Cellulose, Technologie und Handels-GmbH, 76584 Gernsbach (DE)
(72) Erfinder: Salow, Hartmut, Dr., 76596 Forbach (DE); Herhut, Brigitte, 76571 Gaggenau (DE)
(74) Vertreter: Henkel, Feiler, Hänzel

(57) **Zusammenfassung**

Beschrieben wird ein Filtermaterial, das mit mit Geschmackssubstanzen beladenen Cyclodextrinen beaufschlagt ist, wobei das Filtermaterial dadurch gekennzeichnet ist, dass das Filtermaterial ferner 1 bis 99 % unbeladene Cyclodextrine aufweist, sowie Verfahren zur Herstellung desselben.

## Beschreibung

Die vorliegende Erfindung betrifft ein Filtermaterial, das sowohl ausgezeichnete Aromatisierungs- als auch ausgezeichnete Aromaschutzeigenschaften besitzt, sowie ein Verfahren zur Herstellung desselben.

Die Herstellung von Filtermaterialien für die Kalt- und Heißfiltration, z.B. Teebeutel, Kaffeebeutel, Filterbeutel für Aromen und/oder Gewürze und Filterpapiere für Tee oder Kaffee für die Getränkeindustrie, ist auf dem einschlägigen Fachgebiet bekannt.

Im allgemeinen erfolgt die Herstellung eines Filtermaterials dabei aus Naturfasern oder einer Kombination von Naturfasern und synthetischen Fasern in an sich auf dem einschlägigen Fachgebiet bekannter Weise unter Verwendung einer Papiermaschine.

Dabei wird in einer ersten Stufe eine wässrige Suspension von Naturfasern auf ein Papiermaschinensieb aufgebracht, worauf die Aufschlämmung über erste Entwässerungskammern geleitet wird. Dabei bildet sich auf dem bewegten Sieb eine erste Faserschicht aus den Naturfasern.

Im Falle der Produktion eines heißsiegelfähigen Papiers aus sowohl Naturfasern als auch synthetischen Fasern werden dann in einer zweiten Stufe die heißsiegelfähigen, synthetischen Fasern in Form einer zweiten Suspension bei der Weiterbewegung des Papiermaschinensiebes über zweite Entwässerungskammern zugeführt, wobei über den zweiten Entwässerungskammern eine zweite Schicht aus synthetischen Fasern auf der ersten Schicht abgelagert wird.

Bei der Weiterbewegung des Papiermaschinensiebes mit den beiden aufeinanderliegenden Faserschichten wird dann eine Trocknung vorgenommen, wodurch die synthetischen Fasern an die erste Faserschicht angeschmolzen werden können, so dass sie sich mit den Naturfasern der ersten Schicht verbinden können. In diesem Fall kann es zu einer teilweisen Durchdringung der beiden Schichten kommen.

Ferner sind auf dem einschlägigen Fachgebiet bereits Teefilterpapiere bekannt, die eine Aromatisierung des aus diesem Material hergestellten Teebeutels im Aufguß bewirken (Hung. Pat. Anm. 509/85, Erfinder: Szejtli J., Szejtli M. und Szente L.). Hierzu werden die Teefilterpapiere mit mit Aromaölen wie Pfefferminzöl, Bergamotöl, Limonenöl, Jasminöl oder anderen Ölen, beladenen beta-Cyclodextrinen behandelt, indem die beladenen beta-Cyclodextrine in Verbindung mit speziellen, flüssigen Bindemitteln, wie z.B. Dextran, Acryldextrin oder Polyvinylalkohol, auf das Filterpapier aufgebracht und dort gebunden werden.

Aus der WO 97/33 044 sind Verpackungsmaterialien bekannt, in/auf die durch einen speziellen Strich oder eine Laminierung Cyclodextrine ein- bzw. aufgebracht sind. Die Cyclodextrine dienen dabei dazu, ein Eindringen schädlicher Substanzen zu verhindern. Ein Aromaschutz von in diese Verpackungsmaterialien eingepackten Stoffen durch diese Verpackungsmaterialien wird nicht erwähnt.

Aufgabe der vorliegenden Erfindung ist es jedoch, Filterpapiere bereitzustellen, die nicht nur ausgezeichnete Aromatisierungseigenschaften sondern auch ausgezeichnete Aromaschutzeigenschaften aufweisen.

Eine weitere Aufgabe der vorliegenden Erfindung ist es, ein Verfahren zur Herstellung desselben anzugeben.

Gegenstand der vorliegenden Erfindung ist ein Filtermaterial, das mit mit Geschmackssubstanzen beladenen Cyclodextrinen beaufschlagt ist, wobei das Filtermaterial dadurch gekennzeichnet ist, dass das Filtermaterial ferner 1 bis 99 % unbeladene Cyclodextrine aufweist.

Weitere vorteilhafte Ausführungsformen sind in den Unteransprüchen 2 bis 6 dargestellt.

Weiterer Gegenstand der vorliegenden Erfindung ist ein Verfahren zur Herstellung eines derartigen Filtermaterials, das dadurch gekennzeichnet ist, dass das Filtermaterial sowohl mit beladenen als auch mit unbeladenen Cyclodextrinen beaufschlagt wird.

Weiterer Gegenstand der vorliegenden Erfindung ist ein Verfahren zur Herstellung eines derartigen Filtermaterials, das dadurch gekennzeichnet ist, dass das Filtermaterial mit unbeladenen Cyclodextrinen beaufschlagt wird und ein Teil der Cyclodextrine anschließend mit Geschmackssubstanzen beladen wird.

Die vorliegende Erfindung beruht dabei auf der Erkenntnis, dass durch eine Kombination von beladenen und unbeladenen Cyclodextrinmolekülen auf bzw. in dem Filtermaterial dem Filtermaterial Aromatisierungs- und Aromaschutzeigenschaften verliehen werden.

Ohne an irgendeine Theorie gebunden werden zu wollen, gehen die Erfinder der vorliegenden Erfindung nämlich davon aus, dass aus dem Füllgut beispielsweise Tee, das in dem erfindungsgemäßen Filtermaterial abgepackt ist, während der Lagerung Geschmackskomponenten entweichen können, so dass die Geschmacksqualität des Füllguts bei späterer Verwendung verschlechtert wird.

Durch das Vorsehen unbeladener Cyclodextrine in dem Filtermaterial werden diese Geschmackssubstanzen jedoch vor Verlassen des Filtermaterials eingefangen und in dem Filtermaterial festgehalten, bis das das Füllgut enthaltende Filtermaterial seiner Verwendung zugeführt wird. Zu diesem Zeitpunkt geben dann die im Laufe der Lagerung beladenen wie auch die bereits bei der Herstellung des Filtermaterials beladenen Cyclodextrine beispielsweise bei Kontakt mit Wasser die eingelagerten Geschmackssubstanzen frei, wodurch die Qualität des Aufgusses stark verbessert wird.

Somit ist es erfindungsgemäß möglich, dem Füllgut neben der Bewahrung seines ursprünglichen Geschmacks auch einen in gewünschter Weise, beispielsweise hinsichtlich einer Geschmacksnote verbesserten Geschmack zu verleihen.

So kann beispielsweise dem Füllgut eine spezielle Geschmacksnote, wie z.B. "blumig", "frisch", "rund", "weich", "voll" usw., oder ein Gemisch aus diesen Einzelnoten verliehen werden.

Hierdurch ist es möglich, beispielsweise ein Füllgut minderer Qualität, z.B. einen mittelklassigen Tee, durch Zuordnung der richtigen, jedoch ursprünglich im Füllgut fehlenden Inhaltsstoffe geschmacklich aufzuwerten.

So können erfindungsgemäß als Geschmackssubstanzen beispielsweise zur Verbesserung des Teegeschmacks Substanzen, wie n-Hexanal, Linalool, trans-2-Hexenal, cis-3-Hexen-1-ol, Phenylacetaldehyd, n-Pentanol, 1-Penten-3-ol, trans-2-Pentenal, 2-Methylpropanal oder Ethylvanilin zum Einsatz kommen.

Bei den erfindungsgemäß verwendeten Cyclodextrinen kann es sich um die auf dem einschlägigen Fachgebiet bekannten Cyclodextrine handeln (vgl. beispielsweise WO 97/33044, Seiten 12 bis 19).

Cyclodextrine sind von ihrer chemischen Natur her cyclische Oligosaccharide aus mindestens 5, über α(1→4)-Bindungen verknüpfte Glucopyranose-Einheiten. Obwohl Cyclodextrine mit bis zu 12 Glucopyranose-Einheiten bekannt sind, werden in den meisten Fällen α-, β- oder γ-Cyclodextrine mit 6, 7 bzw. 8 Glucopyranose-Einheiten verwendet.

So werden erfindungsgemäß bevorzugt α-, β- oder γ-Cyclodextrine oder ein beliebiges Gemisch hiervon verwendet. In einer speziell bevorzugten Ausführungsform gemäß der vorliegenden Erfindung handelt es sich bei den verwendeten Cyclodextrinen um β- und/oder γ-Cyclodextrine. Für den erfindungsgemäßen Einsatzzweck eignen sich neben den underivatisierten Cyclodextrinen auch deren Derivate, wie z.B. Trimethyl-beta-cyclodextrin, Dimethyl-beta-cyclodextrin, Hydroxyethyl-beta-cyclodextrin und/oder Hydroxypropyl-beta-cyclodextrin."

Der Anteil der beladenen Cyclodextrine beträgt dabei erfindungsgemäß üblicherweise 1 bis 99 %, zweckmäßigerweise 3 bis 80 % und vorzugsweise 5 bis 30 % der gesamten im Filtermaterial vorhandenen Cyclodextrine. So beträgt folglich der Anteil der unbeladenen Cylodextrine üblicherweise 99 bis 1 %, zweckmäßigerweise 97 bis 20 % und vorzugsweise 95 bis 70 % der gesamten im Filtermaterial vorhandenen Cyclodextrine.

Die Gesamtmenge der auf bzw. in dem Filtermaterial enthaltenen Cyclodextrine beträgt erfindungsgemäß üblicherweise 0,01 bis 10 Gew.-%, zweckmäßigerweise 0,1 bis 5 Gew.-% und vorzugsweise 0,1 bis 2 Gew.-%, bezogen auf das Gewicht des gesamten das Filtermaterial bildenden Feststoffe.

Das erfindungsgemäße Filtermaterial weist üblicherweise ein Flächengewicht zwischen 8 und 90 g/m² und vorzugsweise ein Flächengewicht zwischen 10 und 25 g/m² auf.

Das erfindungsgemäße Filtermaterial kann wie oben ausgeführt, aus Naturfasern und/oder synthetischen Fasern bestehen. Bei den Naturfasern kann es sich beispielsweise um solche aus Nadelholzzellstoff und/oder Abacafasern handeln. Üblicherweise besteht die erste Schicht hauptsächlich (üblicherweise 60 bis 90%) aus Naturfasern. Wenn ein heißsiegelfähiges Filtermaterial hergestellt werden soll, kann erfindungsgemäß eine hautsächlich (üblicherweise 10 bis 40%) aus siegelfähigen Polymerfasern bestehende zweite Schicht auf die erste Schicht aufgebracht werden.

Das erfindungsgemäße Filtermaterial lässt sich in bevorzugter Weise zur Herstellung von gegebenenfalls heißsiegelfähigen Filterbeuteln für die Heiß- und/oder Kaltfiltration, sowie zur Herstellung von Teebeuteln, Kaffeebeuteln und/oder Gewürzbeuteln verwenden.

Im folgenden wird das einen weiteren Aspekt der vorliegenden Erfindung darstellende Verfahren zur Herstellung des erfindungsgemäßen Filtermaterials beschrieben. Zur Veranschaulichung wird dabei das erfindungsgemäße Verfahren anhand von beigefügten Figuren am Beispiel eines zweilagigen Filtermaterials näher erläutert.

Das erfindungsgemäße Herstellungsverfahren ist jedoch nicht auf dieses Verfahren beschränkt, sondern kann in analoger Weise auch zur Herstellung einlagiger Filtermaterialien verwendet werden.

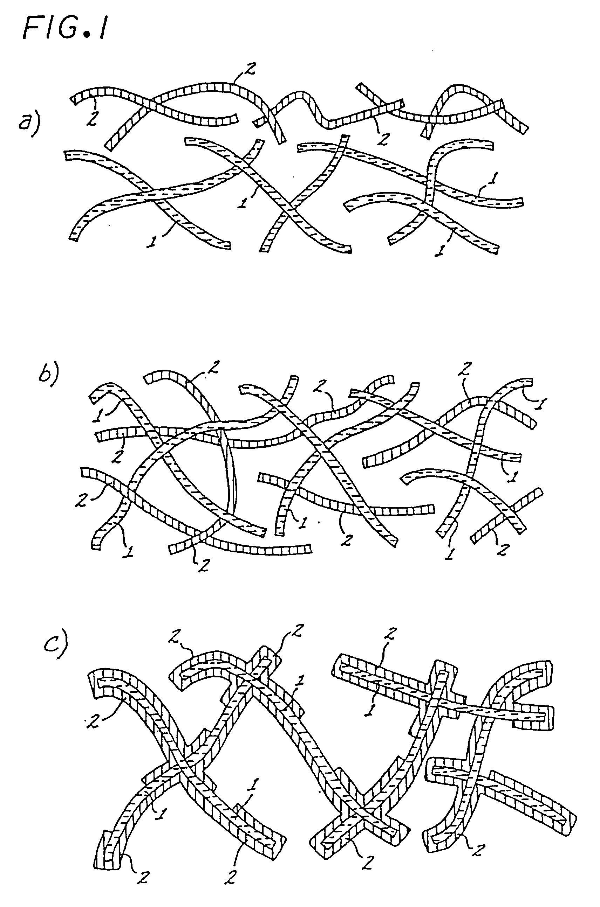

Fig. 1 zeigt die verschiedenen Stadien bei der Bildung des erfindungsgemäßen Filtermaterials aus Naturfasern und synthetischen Fasern am Beispiel der Verwendung einer Papiermaschine in einer allgemeinen, grob schematischen Darstellung.

In Fig. 1 ist in einer schematischen Darstellung die Bildung des erfindungsgemäßen Filtermaterials gezeigt. Dabei ist in Fig. 1a) die Bildung einer ersten Faserschicht aus Naturfasern 1 und die Bildung einer zweiten Faserschicht mit synthetischen, heißsiegelbaren Fasern 2 dargestellt. Die Bildung der zweiten Schicht mit den Fasern 2 erfolgt also durch Ablagerung über der ersten Schicht, welche durch die Naturfasern 1 gebildet ist. In der Zeichnung sind zur Unterscheidung die Naturfasern 1 waagerecht schraffiert, während die synthetischen Fasern 2 annähernd senkrecht schraffiert wurden.

Fig. 1b) zeigt, wie durch die beschriebene Entwässerung der beiden Schichten, insbesondere der zweiten Schicht mit den Fasern 2, eine teilweise Durchdringung der beiden Schichten erzielt wird, so daß die synthetischen Fasern 2 zwischen die Naturfasern 1 gelangen.

In einem weiteren Herstellungsschritt werden die einander teilweise durchdringenden Schichten 1 und 2 getrocknet und dabei derart erhitzt, daß die synthetischen Fasern 2 schmelzen und sich bei der Wiederverfestigung so um die Fasern 1 legen, daß diese zumindest teilweise umhüllt werden. Das Filtermaterial ist somit heißsiegelfähig geworden (Fig. 1c).

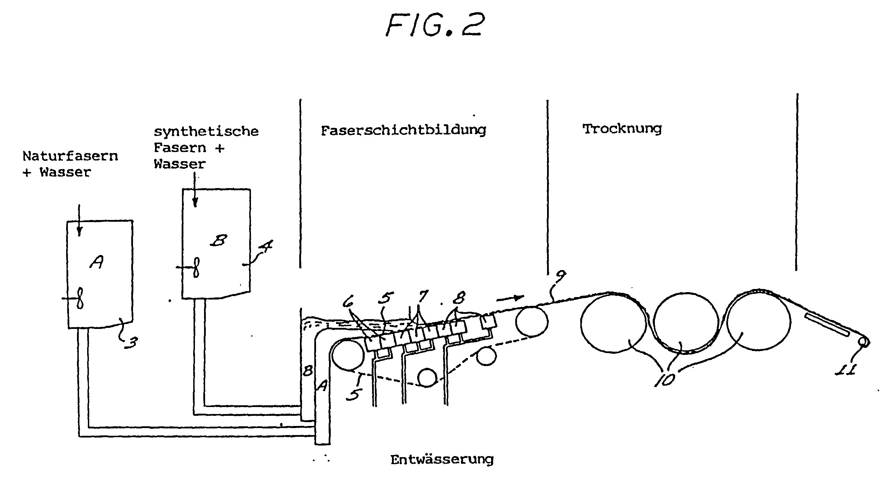

Fig. 2 zeigt den grundsätzlichen Aufbau einer Papiermaschine, wie sie zur Herstellung eines erfindungsgemäßen Filtermaterials verwendet werden kann. Zunächst wird aus den gemahlenen Naturfasern, gegebenenfalls einem Anteil anderer Fasern und Wasser eine Suspension A hergestellt. Diese Suspension A kann gemäß einer Ausführungsform der vorliegenden Erfindung ferner beladene und/oder unbeladene Cyclodextrinmoleküle in der oben angegebenen Menge umfassen. Dazu können die beladenen und/oder unbeladenen Cyclodextrine gegenenfalls zusammen mit den zu verwendenden Geschmackssubstanzen in die Suspension A eingetragen werden.

Ferner wird eine Suspension B hergestellt, die gegenenfalls einen Anteil Naturfasern, heißsiegelfähige Polymerfasern und Wasser umfasst. In einer weiteren Ausführungsform der vorliegenden Erfindung kann auch diese Suspension B entweder zusätzlich zur Suspension A oder statt dessen beladene und/oder unbeladene Cyclodextrinmoleküle gemäß den obigen Ausführungen umfassen.

Diese beiden Suspensionen A und B werden aus den jeweiligen Behältern (3 und 4) über den sogenannten Stoffauflauf (head box) der Papiermaschine zugeführt. Diese besitzt im wesentlichen ein umlaufendes Sieb (5), welches über eine Anzahl von Entwässerungskammern (6, 7 und 8) hinweggeführt wird.

Über geeignete Rohrleitungen und Pumpvorrichtungen, die nicht näher dargestellt sind, wird die Suspension A auf das Sieb 5, über den ersten beiden Entwässerungskammern 6, geleitet, wobei durch die Kammern 6 und die Entwässerungsleitung das Wasser abgesaugt wird. Dabei bildet sich auf dem bewegten Sieb 5 eine erste Faserschicht aus den Naturfasern 1. Bei der Weiterbewegung des Siebes 5 über die Entwässerungskammern 7 wird die zweite Suspension B zugeführt, wobei über den Entwässerungskammern 7 die zweite Schicht aus synthetischen Fasern auf der ersten Schicht abgelagert wird. Die Entwässerung erfolgt dabei über die Entwässerungsleitung. Bei der Weiterbewegung des Siebes 5 mit den beiden aufeinanderliegenden Faserschichten wird über die Entwässerungskammern 8 eine Entwässerung vorgenommen, wodurch die beiden Schichten einander teilweise durchdringen. Durch entsprechende Einstellung der Entwässerung kann die Durchdringung mehr oder weniger stark sein.

Das nunmehr gebildete Material 9 aus Naturfasern und synthetischen Fasern wird von dem Sieb abgenommen und einer Trocknung zugeführt. Diese Trocknung kann auf verschiedene Art und Weise erfolgen, z. B. durch Kontakttrocknung oder Durchströmtrocknung.

Die Elemente 10 geben nur grob schematisch den Hinweis auf entsprechende Trocknungselemente.

In Fig. 2 sind 3 Trockenzylinder 10 gezeichnet, über die die geformte Papierbahn im Kontaktverfahren getrocknet wird. Es ist jedoch auch praktikabel, die gebildete Papierbahn nur über einen Zylinder zu führen und sie mit heißer Luft zu trocknen, ohne daß die Bahn auf diesem Zylinder aufliegt.

Die Erwärmung des zweischichtigen Fasermaterials bringt die synthetischen Fasern 2 in der Mischschicht 9 zum Schmelzen. Bei der Wiederverfestigung am Ausgang der Trockenstation umhüllen die synthetischen Fasern zumindest teilweise die Naturfasern und das heißsiegelfähige Filtermaterial wird auf eine Rolle 11 aufgerollt.

Um das Filtermaterial im Rahmen des erfindungegemäßen Verfahrens mit beladenen und/oder unbeladenen Cyclodextrinen zu beaufschlagen, bieten sich also während des Produktionsprozesses verschiedene Verfahrensstufen als Zugabeort der Cyclodextrine an:
1) Die Zugabe der Cyclodextrine kann beispielsweise in der Masse vor dem Stoffauflauf der Papiermaschine erfolgen. Hierbei können beladene und/oder unbeladene oder unbeladene Cyclodextrine und die Ladung bildende Geschmackssubstanzen getrennt dem Stoffauflauf zugesetzt werden.
2) Ferner kann die Zugabe der Geschmackssubstanzen und/oder der unbeladenen Cyclodextrine in der Leimpresse (wäßrige Lösung, Emulsion, Dispersion) während des Produktionsprozesses erfolgen.
3) Des weiteren besteht die Möglichkeit der Zugabe im Rahmen weiterer Verfahrensstufen, z.B. beim Sprühbalken oder bei der Befeuchtungseinrichtung am Ende des Produktionsprozesses. Dies gilt in gleicher Weise auch für die Beladung der Cyclodextrine mit Geschmackssubstanzen.

Hierbei gilt ferner, dass die Beladung der Cyclodextrine mit den Geschmackssubstanzen über das in einfacher Weise ermittelbare Molverhältnis einfach und genau eingestellt werden kann.

Bevorzugt verwendbar ist das erfindungsgemäße Filtermaterial zur Herstellung von Teebeuteln. Gegenstand einer bevorzugten Ausführungsform der vorliegenden Erfindung ist folglich ein aus dem erfindungsgemäßen Filtermaterial hergestellter Teebeutel.

Die folgenden Beispiele sollen der weiteren Veranschaulichung der vorliegenden Erfindung dienen. Es ist jedoch selbstverständlich, dass die Beispiele die vorliegende Erfindung jedoch in keinster Weise einschränken.

Aus einem Teebeutelpapier wurden sogenannte Doppelkammerbeutel mit einem Papiergewicht von etwa 0,2 g gefertigt. Bei dem verwendeten Teebeutelpapier handelte es sich um ein handelsübliches, nicht heißsiegelfähiges Papier (Flächengewicht 12,2 g/m²), wie es auf dem einschlägigen Fachgebiet zur Herstellung dieser Doppelkammerbeutel verwendet wird. Dieses Teebeutelpapier wurde anschließend mit γ-Cyclodextrinen in einer Menge von 15 mg/kg Teebeutelpapier, wobei 9 % der γ-Cyclodextrine mit der Geschmackssubstanz Linalool beladen waren, beaufschlagt. Die zudosierte Menge an Linalool pro Beutel betrug somit 1,0; 1,5 bzw. 2,0 ppm (siehe Beispiele 1, 2, 3).

Anschließend wurden diese Beutel jeweils mit 2,0 g Schwarztee befüllt. Die einzelnen Beutel wurden aufgegossen und jeweils 2 min ziehen gelassen. Anschließend erfolgte eine Geschmacksprüfung durch eine Gruppe von freiwilligen Fachleuten.

Als Vergleichsprobe diente ein gefüllter Teebeutel aus unbehandeltem Teebeutelpapier.

| | | Beispiel 1 | Beispiel 2 | Beispiel 3 | Vergleichsbeispiel 1 |
|---|---|---|---|---|---|
| Zusatzstoff CAVAMAX W8 | 9% Linalool | | | | |
| Zudosierte Menge/Beute 1 | ppm | 1,0 | 1,5 | 2,0 | 0 |
| 2%-ig, gelöst in Wasser | mg | 70 | 105 | 140 | 0 |

Die die γ-Cyclodextrine und die Geschmackssubstanz Linalool enthaltende Beaufschlagungslösung wurde bei 35 °C, 250/min im Ultraschallbad hergestellt.

### Ergebnisse der Bewertung:

Die Versuchspersonen bewerteten den Geschmack der Tees der Beispiele 1 bis 3, ausgehend von dem als Vergleich dienenden Tee des Vergleichsbeispiels 1, wie folgt:
Beispiel 1: ein angenehmer, klarer, frischer Geschmack mit einer leicht astringenten Note;
Beispiel 2: sehr ähnlich zu Beispiel 1, jedoch ein wenig heller in der Farbe mit leichtem Citrusgeschmack, ziemlich angenehm;
Beispiel 3: ähnlich Beispiel 1 mit leichtem Citrusgeschmack, Farbe ähnlich wie in Beispiel 1.

Daraus ist ersichtlich, dass die erfindungsgemäßen Filtermaterialien ausgezeichnete Aromatisierungs- und Aromaschutzeigenschaften aufweisen.

## Patentansprüche

1. Filtermaterial, das mit mit Geschmackssubstanzen beladenen Cyclodextrinen beaufschlagt ist, wobei das Filtermaterial **dadurch gekennzeichnet ist, dass** das Filtermaterial ferner 1 bis 99 % unbeladene Cyclodextrine aufweist.

2. Filtermaterial nach Anspruch 1, **dadurch gekennzeichnet, dass** es sich bei den Cyclodextrinen um β- oder γ-Cyclodextrine handelt.

3. Filtermaterial nach Anspruch 2, **dadurch gekennzeichnet, dass** es sich bei dem β-Cyclodextrin um underivatisiertes β-Cyclodextrin oder ein derivatisiertes β-Cyclodextrin, wie Trimethyl-beta-cyclodextrin, Dimethyl-beta-cyclodextrin, Hydroxyethyl-beta-cyclodextrin und/oder Hydroxypropyl-beta-cyclodextrin handelt.

4. Filtermaterial nach einem der beiden Ansprüche 1 bis 3, **dadurch gekennzeichnet, dass** der Anteil der beladenen Cyclodextrine 5 bis 30 %, bezogen auf die Gesamtmenge an vorhandenen Cyclodextrinen, beträgt.

5. Filtermaterial nach einem der Ansprüche 1 bis 4, **dadurch gekennzeichnet, dass** es sich bei den die Beladung bildenden Geschmackssubstanzen um eine oder mehrere Verbindungen handelt, die aus n-Hexanal, Linalool, trans-2-Hexenal, cis-3-Hexen-1-ol, Phenylacetaldehyd, n-Pentanol, 1-Penten-3-ol, trans-2-Pentenal, 2-Methylpropanal und Ethylvanilin ausgewählt sind.

6. Filtermaterial nach einem der Ansprüche 1 bis 5, **dadurch gekennzeichnet, dass** das Filtermaterial ein Flächengewicht von 10 bis 25 g/m² aufweist.

7. Filtermaterial nach einem der Ansprüche 1 bis 6, **dadurch gekennzeichnet, dass** das Filtermaterial eine erste Schicht, die Naturfasern umfasst, und eine zweite Schicht, die heißsiegelfähige Polymerfasern umfasst, aufweist.

8. Verfahren zur Herstellung eines Filtermaterials nach einem der Ansprüche 1 bis 7, bei dem die Cyclodextrine und die Geschmackssubstanzen mit einem Auftragaggregat ohne zusätzlichen Binder zusammen mit Wasser auf das Filtermaterial aufgetragen werden.

9. Verfahren zur Herstellung eines Filtermaterials nach einem der Ansprüche 1 bis 7, bei dem die Cyclodextrine und die Geschmackssubstanzen mittels eines Streubalkens ohne Mitverwendung von Wasser auf das Trägermaterial aufgebracht werden.

10. Verfahren zur Herstellung eines Filtermaterials nach einem der Ansprüche 1 bis 7, bei dem die Cyclodextrine und die Geschmackssubstanzen der Fasermasse vor dem eigentlichen Papierprozeß zugegeben werden.

11. Verfahren zur Herstellung eines Filtermaterials nach einem der Ansprüche 1 bis 7, bei dem die unbeladenen Cyclodextrine mit Geschmackssubstanzen in dem gewünschten Mischungsverhältnis in die Auftragslösung eingetragen werden und die Geschmackssubstanzen im Trockenaggregat in den Cyclodextrinen fixiert werden.

12. Verfahren zur Herstellung eines Filtermaterials nach einem der Ansprüche 1 bis 7, bei dem die unbeladenen Cyclodextrine in der Masse zugegeben werden und die Beladung mit Geschmackssubstanzen in einer nachgeschalteten Stufe erfolgt.
